# EUROPÄISCHE PATENTANMELDUNG

(11) **EP 1 081 820 A1**
(43) Veröffentlichungstag der Anmeldung: **07.03.2001**
(21) Anmeldenummer: 00115199.2
(22) Anmeldetag: 13.07.2000
(51) Int. Cl.: H02G 3/04

(54) **Vorrichtung zum Herstellen des Potentialausgleichs in Leitungsführungskanälen**

(30) Priorität: 28.08.1999 DE 29915093 U
(71) Anmelder: Tehalit GmbH, D-67716 Heltersberg (DE)
(72) Erfinder: Meyer, Hans, 66851 Bann (DE); Szabo, Thomas, 66849 Landstuhl (DE)
(74) Vertreter: Patentanwälte Möll und Bitterich

(57) **Zusammenfassung**

Gegenstand der Erfindung ist eine Vorrichtung (30) zum Herstellen des Potentialausgleichs zwischen Unterteil (11, 12, 13, 14, 15) und Deckel (16, 17, 18) eines Leitungsführungskanals (10). Die Vorrichtung (30) ist ein Stanz-Biege-Teil aus Stahlblech mit einer Basisplatte (31), Haltefüßen (34, 35), mit denen sich die Vorrichtung am Boden (11) des Kanalunterteils definiert abstützt, und Kontaktfüßen (32). Des weiteren besitzt das Stanz-Biege-Teil (30) ein Kopfteil (37) mit wenigstens einer U-förmigen Aussparung (36), passend zu Deckelhalteprofilen (19) der Deckel (16, 17, 18). Die Kontaktfüße (32) und die Kopfteile (37) besitzen scharfe Kanten und/oder Spitzen, die etwaige Oberflächenbeschichtungen oder Oxidschichten von Kanalunterteil und Kanaldeckel durchschneiden und so die erforderliche niederohmige Verbindung herstellen.

## Beschreibung

Die Erfindung betrifft Vorrichtungen zum Herstellen des Potentialausgleichs zwischen Unterteil und Deckel von aus Leichtmetall bestehenden Leitungsführungskanälen gemäß dem Oberbegriff des Anspruchs 1.

Leitungsführungskanäle aus Leichtmetall, umfassend ein Unterteil und wenigstens einen Deckel, wobei Unterteil und Deckel mit korrespondierenden Verschlussprofilen versehen sind, die eine lösbare Befestigung zwischen Deckel und Unterteil ermöglichen, sind weltweit in großen Stückzahlen und seit langer Zeit in Gebrauch. Je nach den Wünschen des Kunden sind die Oberflächen blank, eloxiert, lackiert oder pulverbeschichtet.

Um die elektrische Sicherheit zu gewährleisten, müssen alle Bestandteile von metallischen Leitungsführungskanälen, die ein Benutzer berühren könnte, geerdet sein. Dazu sind alle Bestandteile der handelsüblichen Leitungsführungskanäle mit Anschlüssen ausgerüstet, die über Potentialausgleichsleitungen miteinander verbunden werden. Bei Leitungsführungskanälen aus Aluminium werden diese Erdungsanschlüsse stets gesondert hergestellt und entweder werksseitig oder baustellenseitig an den Kanalelementen angebracht. Dabei muss darauf geachtet werden, dass isolierende Oberflächenschichten, auch die sich auf blankem Aluminium bildende Oxidschicht, durchdrungen werden. Anschließend müssen auf der Baustelle die Potentialausgleichsleitungen montiert werden. Dies ist mit einem erheblichen Aufwand verbunden.

Es hat daher nicht an Versuchen gefehlt, den vorgeschriebenen Potentialausgleich auf andere Weise herzustellen. Nach dem Stand der Technik werden dazu aus Stahlblech hergestellte Hilfsteile verwendet, die auf das Kanalunterteil bzw. den Kanaldeckel aufgesteckt werden. Diese Hilfsteile sind mit scharfen Kanten und/oder Spitzen ausgerüstet, die die Oberflächenbeschichtungen von Kanalunterteil und Deckel durchschneiden und so die elektrische Verbindung herstellen sollen.

Die DE-U 90 12 163 zeigt beispielsweise ein solches Hilfselement Dieses besitzt einen Fuß, mit dem es auf eine am Kanalboden vorgesehene Hutschiene lösbar aufgesetzt wird. Der Kopf des Kontaktelementes ist eine scharfe Kante, die sich beim Aufsetzen des Deckels gegen dessen Unterseite anlegt und so den elektrischen Kontakt herstellen soll. Diese Konstruktion mag bei blanken Oberflächen noch eine ausreichend niederohmige Verbindung herstellen; sind die Oberflächen jedoch anodisch oxidiert, lackiert oder pulverbeschichtet, so wird eine elektrische Verbindung mit Sicherheit nicht bewirkt.

Weitere Kontaktelemente für aus Stahlblech hergestellte Kanäle sind bekannt aus der DE-A 197 37 893 oder der EP-B 0469 457. Diese Kontaktelemente stellen die Verbindung zwischen Kanalunterteil und Deckel im Bereich der Verschlussprofile her. Für Leitungsführungskanäle aus Leichtmetall sind sie nicht bestimmt.

Die mit dem vorgeschriebenen Potentialausgleich verbundene Problematik verschärft sich, wenn das Kanalunterteil nicht nur mit einem einzigen Deckel sondern beispielsweise mit zwei oder drei Deckeln verschlossen wird, die dann einzeln geerdet werden müssen. Hier wird oftmals vergessen, alle Deckel untereinander und mit dem Kanalunterteil über Potentialausgleichsleitungen zu verbinden, so dass der Benutzer eines solchen Leitungsführungskanals gefährdet ist.

Der vorliegenden Erfindung liegt daher die Aufgabe zugrunde, Vorrichtungen zum Herstellen des Potentialausgleichs zwischen Unterteil und einem oder mehreren Deckeln von aus Leichtmetall bestehenden Leitungsführungskanälen anzugeben, die so ausgebildet sind, dass die für den Potentialausgleich erforderliche elektrische Verbindung zwischen Kanalunterteil und Deckel beim Aufstecken des Deckels auf das Unterteil in jedem Falle hergestellt wird.

Diese Aufgabe wird gelöst durch eine Vorrichtung mit den Merkmalen des Anspruchs 1.

Die erfindungsgemäße Kontaktvorrichtung benutzt zwei Arten von Füßen, nämlich Haltefüße und Kontaktfüße. Die Haltefüße haben die Aufgabe, die Kontaktvorrichtung im Kanalunterteil zu fixieren. Die Kontaktfüße haben die Aufgabe, den niederohmigen Kontakt zu einer der am Boden des Kanalunterteils vorgesehenen Halteleisten herzustellen. Auch sollen sie die Kontaktvorrichtung in der richtigen, vorzugsweise senkrechten Position zum Boden des Kanalunterteils halten. Dank dieser Trennung der Funktionen kann jede Art von Füßen kompromißlos auf ihre jeweilige Funktion optimiert werden. Dies gilt insbesondere für die Kontaktfüße.

Auf ähnliche Weise wird der elektrische Kontakt auch im Bereich des Deckels hergestellt Die Kontaktvorrichtung besitzt auch im Deckelbereich scharfe Kanten und/oder Spitzen, die sich beim Aufsetzen des Deckels in dessen Kontaktprofil eingraben, wobei die isolierende Oberflächenbeschichtung durchstoßen wird. Der Kopf der Kontaktvorrichtung ist jedoch so ausgestaltet, dass der Deckel bei Bedarf jederzeit wieder abgenommen und wieder aufgesetzt werden kann, ohne dass es zu Beschädigungen kommt.

Im Gegensatz zu den vorbekannten Kontaktelementen ist die erfindungsgemäße Vorrichtung auch nicht federnd, sondern starr. Dadurch ist sichergestellt, dass die isolierenden Oberflächenschichten auch wirklich durchstoßen werden.

Gemäß einer Weiterbildung der Erfindung ist die U-förmige Aussparung im Kopf der erfindungsgemäßen Kontaktvorrichtung trichterförmig angeschrägt. Dies erleichtert das Aufsetzen des Deckels.

Gemäß einer ersten Ausgestaltung der Erfindung wird das Verschlussprofil des Deckels als Kontaktprofil mit verwendet. Dies hat den Vorteil, dass die erfindungsgemäße Kontaktvorrichtung auch in bereits installierten Leitungsführungskanälen nachgerüstet werden kann.

Gemäß einer bevorzugten Ausgestaltung hierzu erfasst und kontaktiert die U-förmige Aussparung gleichzeitig die Verschlussprofile zweier benachbarter Deckel.

Gemäß einer alternativen Ausgestaltung ist an der Unterseite des Deckels eine besondere Kontaktleiste angeformt. Die Position dieser Kontaktleiste kann an die Position der Halteleisten im Kanalunterteil angeglichen werden.

In der einfachsten Ausführung ist die Kontaktleiste eine Flachleiste, in deren Seitenwände sich die scharfen Spitzen der U-förmigen Aussparung eingraben.

Gemäß einer Weiterbildung hierzu besitzt die Kontaktleiste einen T-förmigen Querschnitt, beispielsweise angepasst an den T-förmigen Querschnitt der Halteleisten im Kanalunterteil.

Gemäß einer bevorzugten Weiterbildung der Erfindung sind am Kopf des Stanz-Biege-Teils Auflageflächen für den Deckel bzw. dessen Verschlussprofile vorgesehen. Dank dieses Merkmals sitzen die Deckel stets in der richtigen Position.

Für den Fall, dass auch herkömmliche Potentialausgleichsleitungen verwendet werden sollen, ist in der Basisplatte der erfindungsgemäßen Kontaktvorrichtung ein Flachstecker freigeschnitten, auf den die Potentialausgleichsleitungen aufgesteckt werden.

Vorzugsweise besitzt die erfindungsgemäße Kontaktvorrichtung zwei Paar Kontaktfüße, so dass diese den Stoß zwischen benachbarten Kanalabschnitten überbrücken und so den durchgehenden Potentialausgleich gewährleisten können.

Vorteilhafterweise besteht die Kontaktvorrichtung aus korrossionsgeschütztem Stahlblech.

Anhand der Zeichnung soll die Erfindung in Form eines Ausführungsbeispiels näher erläutert werden. Es zeigen
- Fig. 1: eine Kontaktvorrichtung als Frontsicht,
- Fig. 2: die Kontaktvorrichtung der Fig. 1 als Draufsicht,
- Fig. 3: einen Schnitt entlang der Linie III-III durch die Kontaktvorrichtung der Fig. 1,
- Fig. 4: einen Querschnitt durch einen Leitungsführungskanal mit eingesetzter erster Kontaktvorrichtung,
- Fig. 5: rein schematisch eine Draufsicht auf einen aus drei Kanalelementen gebildeten Leitungsführungskanal,
- Fig. 6: einen Querschnitt durch einen Leitungsführungskanal mit eingesetzter zweiter Kontaktvorrichtung,
- Fig. 7: einen Querschnitt durch einen Leitungsführungskanal mit eingesetzter dritter Kontaktvorrichtung,
- Fig. 8: den Ausschnitt VIII aus Fig. 7 in vergrößerter Darstellung,
- Fig. 9: den Ausschnitt IX aus Fig. 7 in vergrößerter Darstellung und
- Fig. 10: eine gegenüber der Fig. 9 geänderte Ausführungsform.

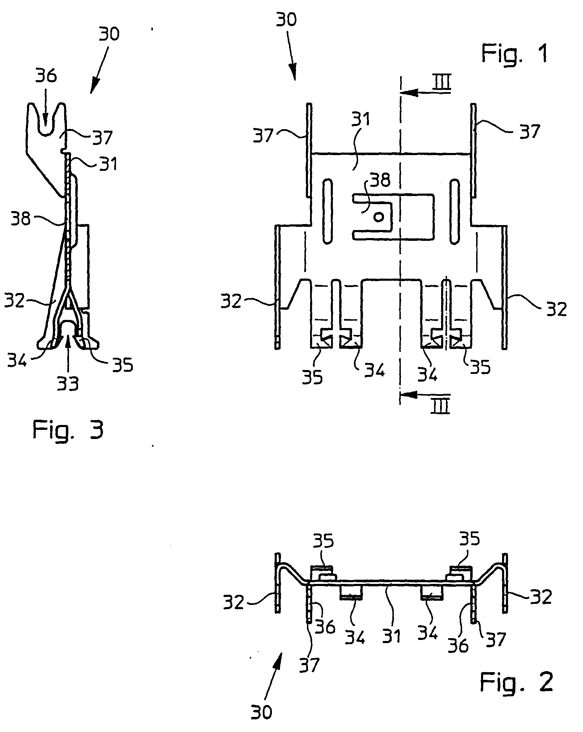

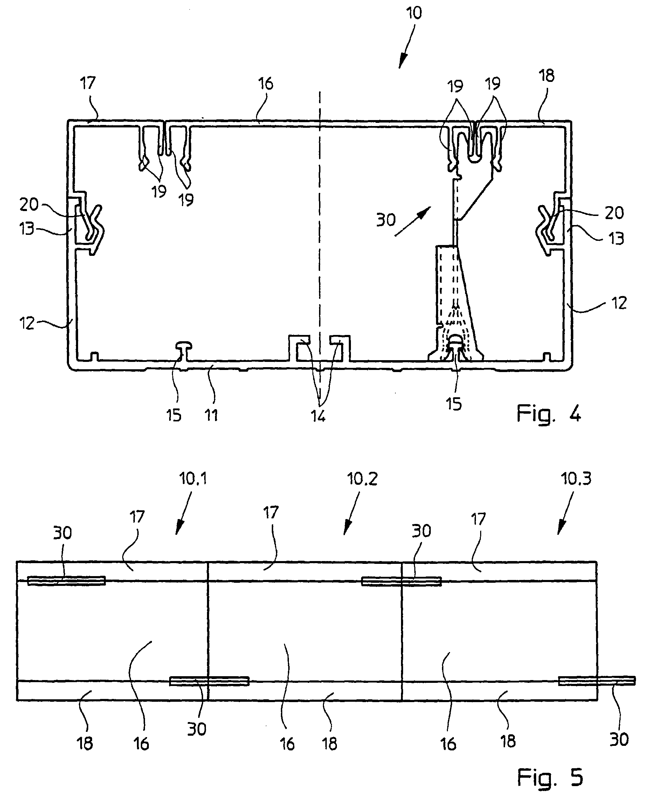

Fig. 1 als Ansicht, Fig. 2 als Draufsicht und Fig. 3 als Schnitt entlang der Linie III-III zeigen eine erste Kontaktvorrichtung 30, mit deren Hilfe der niederohmige Potentialausgleich zwischen Unterteil und Deckel eines Leitungsführungskanals 10 (Fig. 4) aus Leichtmetall hergestellt werden kann. Es handelt sich dabei um ein aus Stahlblech hergestelltes Stanz-Biege-Teil mit einer Basisplatte 31. Am unteren Ende der Basisplatte 31 sind zwei Paar Haltefüße 34, 35 und zwei Paar Kontaktfüße 32 ausgebildet. Die Haltefüßen 34, 35 fixieren die Kontaktvorrichtung 30 am Kanalunterteil (Fig. 4) bzw. an den dort vorgesehenen Halteleisten 14, 15.

Die Kontaktfüße 32 sind mit scharfen Kanten und/oder Spitzen ausgerüstet, die sich in eine der Hafteleisten 14, 15 am Boden 11 des Kanalunterteils eingraben und so die gewünschte niederohmige Verbindung herstellen. Zusätzlich definieren sie die korrekte Position der Kontaktvorrichtung 30 zum Kanalunterteil.

Am oberen Ende der Basisplatte 31 erkennt man zwei Kopfteile 37 mit je einer U-förmigen, trichterförmig angeschrägten Aussparung 36. Die Aussparung 36 besitzt scharfe Kanten, die sich beim Aufsetzen eines Deckels in dessen Kontaktprofil eingraben und so die erforderliche niederohmige Verbindung herstellen.

Wie Fig. 1 noch erkennen lässt, ist in der Basisplatte 31 durch einen dreiseitigen Freischnitt ein Flachstecker 38 ausgebildet, auf den herkömmliche Potentialausgleichsleitungen mit entsprechenden Steckvorrichtungen aufgesteckt werden können.

Fig. 4 zeigt einen Querschnitt durch einen Leitungsführungskanal 10 mit eingesetzter erster Kontaktvorrichtung 30. Das Kanalunterteil besteht aus einem Boden 11 und zwei Seitenwänden 12, an deren oberem Ende Verschlussprofile 13 vorgesehen sind. Die offene Seite des Kanalunterteils 11, 12, 13 ist mit drei Deckeln 16, 17, 18 verschlossen.

Auf der Innenseite des Bodens 11 sind Halteleisten 14, 15 vorgesehen. Auf eine der Halteleisten 15 ist die Kontaktvorrichtung 30 aufgesteckt. Dank der sich auf dem Kanalboden 11 abstülzenden Kontaktfüße 32 steht die Kontaktvorrichtung 30 stets senkrecht. Dadurch fluchtet ihre kopfseitige Aussparung 36 mit den Verschlussprofilen 19 der Deckel 16, 18, die somit gleichzeitig die Funktion des Kontaktprofils erfüllen, so dass das Aufsetzen der Deckel 16, 18 und das Herstellen der niederohmigen Kontakte problemlos von statten geht.

Fig. 5 zeigt rein schematisch eine Draufsicht auf einen aus drei Kanalabschnitten 10.1, 10.2, 10.3 hergestellten Leitungsführungskanal. Einige der Kontaktvorrichtungen 30 sind so angeordnet, dass sie den Stoß zweier benachbarter Kanalabschnitte 10.1, 10.2; 10.2, 10.3 überbrücken, so dass der vorgeschriebene Potentialausgleich über die gesamte Länge des Leitungsführungskanals gewährleistet ist.

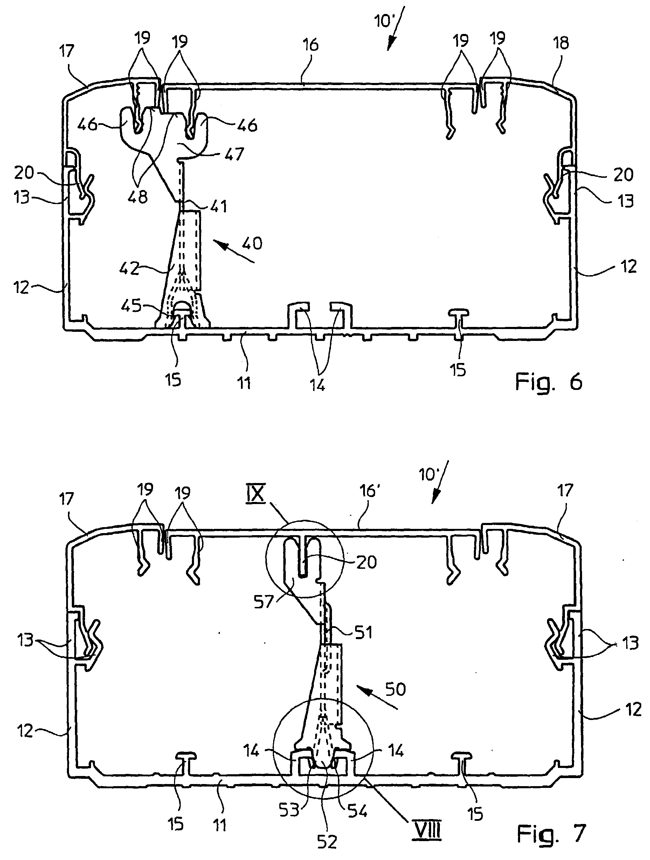

Fig. 6 zeigt einen Querschnitt durch einen Leitungsführungskanal 10' mit eingesetzter zweiter Kontaktvorrichtung 40. Diese unterscheidet sich im Bereich des Kopfes 47 dadurch, dass zwei U-förmige Aussparungen 46 vorgesehen sind, jeweils angepasst an das Deckelhalteprofil 19 zweier Deckel 16, 17. Außerdem sind am Kopf 47 besondere Deckelhalteflächen 48 angeformt, auf denen die Deckelhalteprofile 19 aufsitzen, so dass die Deckel 16, 17, 18 stets ihre korrekte Position einnehmen.

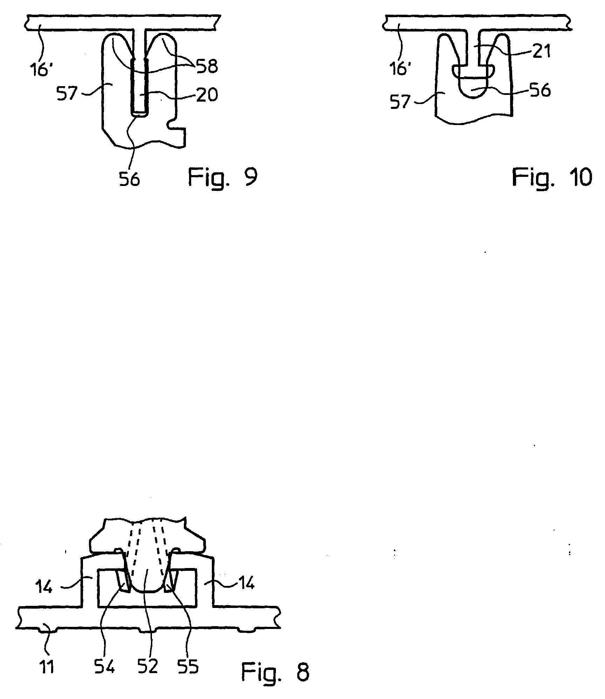

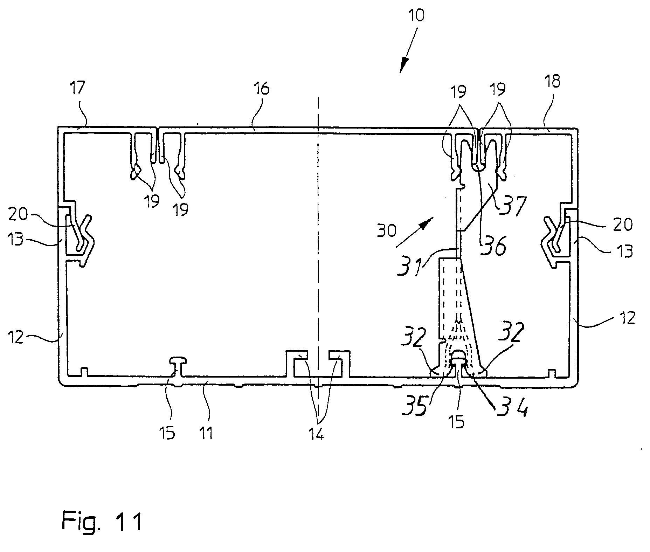

Fig. 7 zeigt einen Querschnitt durch einen Leitungsführungskanal 10' mit eingesetzter dritter Kontaktvorrichtung 50. Deren Fußbereich ist so ausgebildet, dass sie mit der C-förmigen Halteleiste 14 am Boden 11 des Kanalunterteils zusammenwirkt. Die scharfen Kanten der Kontaktfüße 52 graben sich in die Halteleiste 14 ein. Die Haltefüße 53, 54 spreizen sich unter der Halteleiste 14 auf und fixieren die Kontaktvorrichtung 50 unlösbar am Kanalunterteil. Einzelheiten ergeben sich aus der vergrößerten Darstellung in Fig. 8.

An der Unterseite des Deckels 16' ist eine Flachleiste 20 als besonderes Kontaktprofil angeformt Die U-förmigen Aussparungen 56 im Kopf 57 der Kontaktvorrichtung 50 graben sich in die Seitenwände der Flachleiste 20 ein und stellen so die niederohmige elektrische Verbindung her. Einzelheiten ergeben sich aus der vergrößerten Darstellung in Fig. 9.

Fig. 10 zeigt ausschnittsweise an der Unterseite des Deckels 16' ein Kontaktprofil 21 mit T-förmigem Querschnitt, etwa entsprechend der T-förmigen Halteleiste 15 am Boden des Kanalunterteils.

## Patentansprüche

1. Vorrichtung zum Herstellen des Potentialausgleichs zwischen Unterteil (11, 12, 13, 14, 15) und wenigstens einem Deckel (16, 16', 17, 18) von aus Leichtmetall bestehenden Leitungsführungskanälen (10, 10'), im wesentlichen umfassend
- ein aus Stahlblech hergestelltes Stanz-Biege-Teil (30, 40, 50),
- mit einer Basisplatte (31, 41, 51),
- mit einem Fußteil, das mit einer Halteleiste (14, 15) am Boden (11) des Kanals (10, 10') korrespondiert,
- und mit einem Kopfteil, das mit dem Deckel (16, 16', 17, 18) korrespondiert,
- wobei das Stanz-Biege-Teil (30, 40, 50) Unterteil und Deckel des Kanals (10, 10') elektrisch kontaktiert,
gekennzeichnet durch die Merkmale:
- das Stanz-Biege-Teil (30, 40, 50) besitzt wenigstens
- einen Kontaktfuß (32,42, 52), dessen scharfe Kanten sich in die Halteleiste (14, 15) eingraben,
- und ein Kopfteil (37, 47, 57) mit wenigstens einer U-förmigen Aussparung (36, 46, 56), dessen scharfe Kanten und/oder Spitzen sich in ein Kontaktprofil (19, 20, 21) des Deckels (16, 16', 17, 18) eingraben.

2. Vorrichtung nach Anspruch 1, gekennzeichnet durch das Merkmal:
- das Stanz-Biege-Teil (30, 40, 50) besitzt ein Paar Haltefüße (34, 35; 44, 45; 54, 55), die das Stanz-Biege-Teil (30, 40, 50) an der Halteleiste (14, 15) fixieren.

3. Vorrichtung nach Anspruch 1, gekennzeichnet durch das Merkmal:
- die U-förmige Aussparung (36, 46, 56) ist trichterförmig angeschrägt.

4. Vorrichtung nach einem der Ansprüche 1 bis 3, gekennzeichnet durch das Merkmal:
- das Verschlussprofil (19) des Deckels (16, 16', 17, 18) bildet das Kontaktprofil.

5. Vorrichtung nach Anspruch 4, gekennzeichnet durch das Merkmal:
- die U-förmige Aussparung (36) hält und kontaktiert die Verschlussprofile (19) zweier benachbarter Deckel (16, 18).

6. Vorrichtung nach einem der Ansprüche 1 bis 3, gekennzeichnet durch das Merkmal:
- an der Unterseite des Deckels (16') ist eine besondere Kontaktleiste (20, 21) angeformt.

7. Vorrichtung nach Anspruch 6, gekennzeichnet durch das Merkmal:
- die Kontaktleiste (21) besitzt einen T-förmigen Querschnitt.

8. Vorrichtung nach einem der Ansprüche 1 bis 7, gekennzeichnet durch das Merkmal:
- am Kopf (47, 57) des Stanz-Biege-Teils (40, 50) sind Auflageflächen (48, 58) für den Deckel (16, 16', 17, 18) bzw. dessen Verschlussprofile (19) vorgesehen.

9. Vorrichtung nach Anspruch 1 bis 8, gekennzeichnet durch das Merkmal:
- in der Basisplatte (31) ist ein Flachstecker (38) freigeschnitten.

10. Vorrichtung nach einem der Ansprüche 1 bis 9, gekennzeichnet durch die Merkmale:
- das Stanz-Biege-Teil (30) besitzt wenigstens zwei Kontaktfüße (32, 42, 52),
- die Kontaktfüße (32, 42, 52) überbrücken den Stoß zwischen benachbarten Kanalabschnitten (10.1, 10.2, 10.3).

11. Vorrichtung nach einem der Ansprüche 1 bis 10, gekennzeichnet durch das Merkmal:
- das Stanz-Biege-Teil (30) besteht aus Edelstahlblech.
